Europäisches Patentamt

European Patent Office

Office européen des brevets

(19)

(11) **EP 0 843 400 B1**

(12) **FASCICULE DE BREVET EUROPEEN**

(45) Date de publication et mention
de la délivrance du brevet:
**24.04.2002 Bulletin 2002/17**

(51) Int Cl.⁷: **H02J 13/00**

(21) Numéro de dépôt: **97410127.1**

(22) Date de dépôt: **07.11.1997**

(54) **Dispositif de détection préventive de défauts avec identification du type de charge**

Einrichtung zur frühzeitigen Erkennen von Fehlern mit Lasttypidentifikation

Device for preventative fault detection with identification of load type

(84) Etats contractants désignés:
**DE ES GB IT**

(30) Priorité: **18.11.1996 FR 9614337**

(43) Date de publication de la demande:
**20.05.1998 Bulletin 1998/21**

(73) Titulaire: **Schneider Electric Industries SA**
**92500 Rueil-Malmaison (FR)**

(72) Inventeurs:
• **Kasbarian, Jean-Marc**
**38050 Grenoble cedex 09 (FR)**
• **Tian, Simon**
**38050 Grenoble cedex 09 (FR)**
• **Hanchin, Pascal**
**38050 Grenoble cedex 09 (FR)**
• **Clausse, Christine**
**38050 Grenoble cedex 09 (FR)**

(74) Mandataire: **Jouvray, Marie-Andrée et al**
**Schneider Electric SA,**
**Sce. Propriété Industrielle, - A7**
**38050 Grenoble Cedex 09 (FR)**

(56) Documents cités:
**EP-A- 0 581 078        WO-A-95/06349**
**US-A- 4 857 826**

• **HART G W: "NONINTRUSIVE APPLIANCE LOAD**
**MONITORING" PROCEEDINGS OF THE IEEE,**
**vol. 80, no. 12, 1 décembre 1992, pages**
**1870-1891, XP000336363**
• **ANONYMOUS: "Skipping Chopper Cycles in**
**Switching Regulator. April 1976." IBM**
**TECHNICAL DISCLOSURE BULLETIN, vol. 18,**
**no. 11, avril 1976, NEW YORK, US, pages**
**3737-3738, XP002035939**

**Description**

L'invention concerne un dispositif de détection préventive de défauts dans une charge connectée à un réseau d'alimentation électrique alternatif par l'intermédiaire de moyens de commutation comportant un premier interrupteur, dispositif comportant des moyens de contrôle des moyens de commutation, les moyens de contrôle comportant des moyens d'identification du type de charge, des moyens de détection de défaut avec des moyens d'essai, pour connecter temporairement la charge à des moyens d'alimentation d'essai, et des moyens de mesure du courant dans la charge.

Un dispositif connu (EP-A-581078) comporte un circuit optique de détection de la connexion d'une fiche dans une prise connectée au réseau électrique. Il réalise ensuite une détection de défauts par mesure du courant dans la charge lorsque celle-ci est alimentée sous une faible puissance, soit par un générateur d'impulsions, soit par le réseau par l'intermédiaire d'un transformateur-abaisseur. Ce document indique qu'il est possible de détecter le type de charge, plus particulièrement le fait que la charge soit purement dissipatrice ou non, à partir de la mesure du courant lorsque l'alimentation d'essai est constituée par un générateur d'impulsions. Il ne fournit cependant aucun détail sur la manière dont cette détection est réalisée. En pratique, le dispositif décrit ne permet pas réellement une reconnaissance de la nature de la charge et la détection de défauts n'est pas adaptée au type de charge.

L'invention a pour but un dispositif permettant une identification réelle de la nature de la charge, de manière à permettre une détection préventive de défauts satisfaisante pour tout type d'application, notamment pour les charges non linéaires.

Ce but est atteint par le fait que les moyens de commutation comportent des moyens de connexion de la charge au réseau par l'intermédiaire d'une impédance de limitation de forte valeur, les moyens de contrôle comportant des moyens d'actionnement des moyens de connexion pendant une première phase d'essai, les moyens de contrôle comportant des moyens de mesure de la tension de sortie du dispositif, les moyens d'identification du type de charge comportant des moyens de mesure d'un nombre prédéterminé de valeurs du courant et de la tension instantanés dans la charge pendant un nombre limité d'alternances de la tension du réseau, ledit nombre prédéterminé étant de l'ordre de quelques dizaines de valeurs par alternance, les moyens d'identification du type de charge comportant des moyens de détermination du déphasage courant/tension dans la charge et de calcul de l'impédance de charge, à partir des courants et tensions instantanés mesurés, et des moyens de comparaison du déphasage et de l'impédance à des valeurs prédéterminées représentatives de différents types de charge.

Selon un développement de l'invention, les moyens d'identification du type de charge comportent des moyens de détermination, à partir des tensions et courants instantanés mesurés, de paramètres électriques complémentaires représentatifs de la charge, et des moyens de comparaison des paramètres complémentaires à des valeurs prédéterminées représentatives de différents types de charge.

Les paramètres complémentaires peuvent être choisis parmi la puissance active, la puissance réactive, les valeurs moyennes du courant et/ou de la tension, les coefficients harmoniques, les facteurs de dissymétrie au niveau d'une alternance, l'évolution de la tension au cours des premières alternances, la forme de la tension, le nombre de passages à zéro du courant et/ou de la tension.

L'analyse des ondes de courant et tension pendant cette première phase d'essai, au cours de laquelle le courant circulant dans le circuit électrique aval constitué par la charge est limité, par la forte impédance série, à une valeur faible de courant obéissant à des conditions de sécurité, permet d'identifier la nature de la charge.

Selon un mode de réalisation préférentiel, le dispositif comporte un interrupteur électronique et, pendant une seconde phase d'essai les moyens de contrôle ferment temporairement l'interrupteur électronique de manière à appliquer à la charge la tension alternative du réseau pendant une durée limitée du cycle de la tension du réseau, de manière à ce que la tension instantanée appliquée à la charge reste, pendant la seconde phase d'essai, inférieure à une tension pic prédéterminée très inférieure à la tension crête du réseau.

Lorsque le type de charge détecté est une charge résistive, les moyens d'identification du type de charge peuvent comporter des moyens de détermination de l'impédance de charge pendant la seconde phase d'essai et des moyens d'identification fine de la nature de la charge résistive.

Les moyens de détection de défauts comportent, de préférence, des moyens de détection de court-circuit comportant des moyens de comparaison à un seuil de courant prédéterminé du courant mesuré dans la charge pendant la seconde phase d'essai, et des moyens de signalisation d'un court-circuit si le courant mesuré excède ledit seuil de courant, ainsi que des moyens de détection de défaut différentiel comportant des moyens de mesure du courant différentiel pendant la seconde phase d'essai, des moyens de comparaison du courant différentiel à un seuil de courant différentiel prédéterminé, et des moyens de signalisation d'un défaut différentiel si le courant différentiel mesuré excède le seuil de courant différentiel.

Selon un autre développement de l'invention, les moyens de détection de défaut comportent des moyens de détection d'une surcharge comportant des moyens d'estimation de la puissance nominale de la charge adaptés au type de charge détecté, des moyens de comparaison de la puissance nominale estimée à un seuil de puissance prédéterminé, représentatif de la puissance disponible en sortie du dispositif, et des moyens de signalisation d'une surcharge si la puissance nominale estimée excède le seuil de puissance.

La détection d'une surcharge est ainsi corrélée au type de charge détecté. Pour une charge non-linéaire, le comportement de la charge en régime transitoire, ou à froid, n'est pas représentatif de son comportement permanent, sous tension nominale. Cependant, pour un type de charge déterminé, il est possible d'estimer le comportement nominal de la charge, à partir de la détermination des caractéristiques transitoires, ou à froid, de la charge, réalisée grâce à des mesures effectuées pendant une période d'essai. On peut ensuite détecter la présence éventuelle d'un défaut dû à une surcharge à partir du comportement nominal estimé.

Selon un autre développement de l'invention, le dispositif comporte des moyens de détection de la présence d'une charge pendant la première phase d'essai, lesdits moyens comportant des moyens de comparaison de la tension de sortie à un seuil de tension prédéterminé, les moyens de contrôle effectuant l'identification du type de charge et la détection de défaut lorsque la tension de sortie est inférieure ou égale audit seuil de tension.

D'autres avantages et caractéristiques ressortiront plus clairement de la description suivante de différents modes de réalisation de l'invention, donnés à titre d'exemples non limitatifs et représentés aux dessins annexés dans lesquels :

La figure 1 représente, sous forme de schéma-bloc, un mode particulier de réalisation d'un dispositif selon l'invention.

La figure 2 représente un mode particulier de réalisation d'un organigramme de fonctionnement du circuit de contrôle du dispositif selon la figure 1.

La figure 3 illustre les formes d'onde de la tension Vs de sortie du dispositif.

La figure 4 représente un schéma électrique équivalent du dispositif selon l'invention pendant la phase de détection de mise en service de la charge.

La figure 5 représente un mode particulier de réalisation de l'étape d'identification de la charge de la figure 2.

Les figures 6 à 12 illustrent les variations de la tension Vs et du courant Is dans la charge pendant 5 alternances de mesure de la phase d'identification de charge, respectivement pour une charge constituée par une ampoule fluorescente, une unité centrale d'ordinateur, un gradateur, un moteur, des néons, une diode de redressement mono-alternance, et un transformateur.

La figure 13 illustre schématiquement les valeurs caractéristiques de l'impédance et du déphasage pour différents types de charge.

La figure 14 représente un schéma électrique équivalent du dispositif selon l'invention pendant la seconde phase d'essai.

Les figures 15a et 15b illustrent respectivement les formes d'onde des signaux A2 de commande de l'interrupteur électronique et de la tension Vs appliquée à la charge pendant la seconde phase d'essai dans le dispositif selon la figure 14.

Les figures 16a et 16b illustrent respectivement des variantes des signaux A2 et Vs lorsque l'interrupteur électronique est du type représenté aux figures 17 et 18.

Les figures 17 et 18 représentent deux autres modes particuliers de réalisation de l'interrupteur électronique du dispositif selon la figure 1.

La figure 19 représente un mode particulier des étapes F11 d'identification fine, F12 de détection de court-circuit et F14 de défaut différentiel de la figure 2.

La figure 20 représente un mode particulier de réalisation de l'étape de détection de surcharge de la figure 2.

Les figures 21 à 23 illustrent des variantes du circuit de commutation du dispositif selon la figure 1.

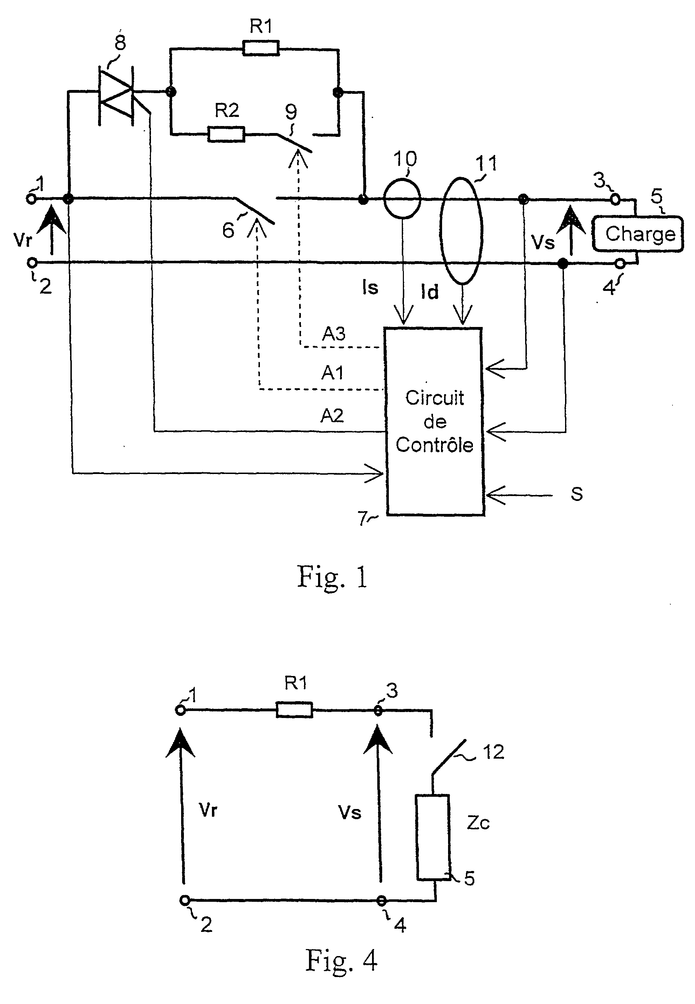

Comme représenté à la figure 1, le dispositif selon l'invention comporte deux bornes d'entrée 1 et 2, connectées à un réseau d'alimentation électrique alternatif. La tension Vr du réseau est donc appliquée entre les bornes 1 et 2. Le dispositif comporte deux bornes de sortie, 3 et 4, entre lesquelles peut être connectée une charge 5. Les bornes 2 et 4 sont connectées directement l'une à l'autre, tandis que les bornes 1 et 3 sont connectées par l'intermédiaire d'un circuit de commutation.

Dans le mode de réalisation particulier représenté à la figure 1, le circuit de commutation comporte un premier interrupteur 6, disposé entre les bornes 1 et 3 et commandé par des signaux A1 de sortie d'un circuit de contrôle 7. Un second interrupteur 8 est connecté, en série avec une impédance de limitation constituée par une résistance de limitation R1, de forte valeur, entre les bornes 1 et 3. Dans le mode de réalisation particulier de la figure 1, le second interrupteur est un interrupteur électronique 8 constitué par un triac recevant sur une électrode de commande des signaux A2 de commande fournis par le circuit de contrôle 7. Un troisième interrupteur 9 est connecté, en série avec une résistance de protection R2 de faible valeur, en parallèle sur la résistance R1. L'interrupteur 9 est commandé par des signaux A3 de sortie du circuit de contrôle 7. Il peut être constitué par un interrupteur électronique, par exemple par un opto-triac ou par un contact d'un relais mécanique à faible courant.

Le dispositif comporte un circuit de mesure du courant de sortie Is, par exemple constitué par un tore 10 connecté en amont de la borne de sortie 3. Le tore 10 fournit au circuit de contrôle 7 des signaux représentatifs du courant Is. La tension Vs de sortie du dispositif, mesurée entre les bornes de sortie 3 et 4 est également appliquée à des entrées du circuit de contrôle 7. Lorsqu'une charge 5 est connectée aux sorties 3 et 4, la tension Vs est représentative de la tension aux bornes de la charge et le courant Is est le courant circulant dans la charge.

Sur la figure 1, un circuit de mesure de courant différentiel résiduel, constitué par un tore différentiel 11 entourant les deux conducteurs disposés en amont des bornes de sortie 3 et 4, fournit au circuit de contrôle 7 des signaux représentatifs du courant différentiel Id dans la charge.

Le dispositif de détection préventive de défauts, avec identification du type de charge, peut être intégré dans tout type d'interface qui est intercalée entre un réseau électrique de distribution et un circuit électrique constituant la charge. A titre d'exemples, il peut être intégré dans un disjoncteur, un contacteur, un variateur de vitesse ou dans une prise électrique commandable. Dans le cas d'un disjoncteur, chaque enclenchement, manuel ou automatique, du disjoncteur provoque l'application au circuit de contrôle 7 d'un signal S d'initialisation. Dans le cas d'une prise, c'est l'enfichage d'une fiche, pouvant raccorder une grande diversité de charges de toute nature, qui provoque l'application du signal S d'initialisation au circuit de contrôle 7. A titre d'exemple, le signal S peut être produit par un circuit optique de détection de présence, du type de celui décrit dans le document EP-A-581078 précité.

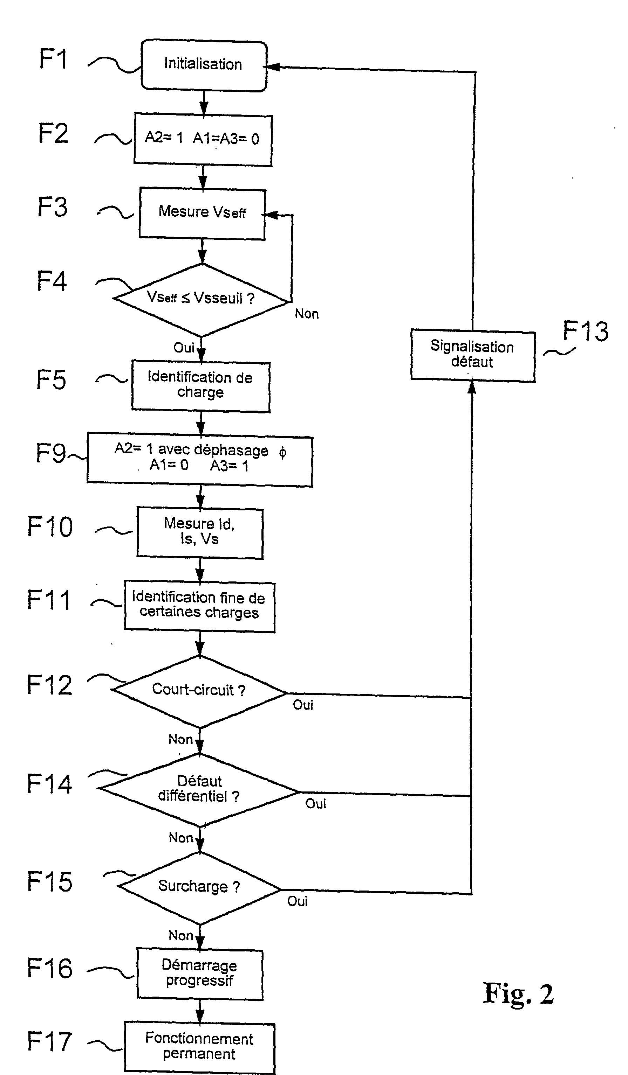

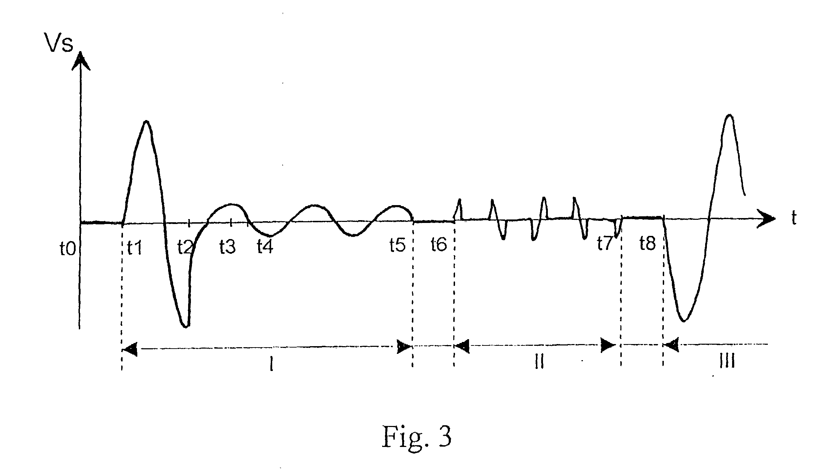

Le fonctionnement du dispositif selon l'invention va être décrit plus en détail ci-dessous en regard de l'organigramme de la figure 2 et des formes d'onde de la figure 3.

Les interrupteurs 6, 8 et 9 étant ouverts (Vs = 0), l'application du signal S au circuit 7 provoque à un instant t0 une étape d'initialisation (F1). Le circuit de contrôle 7 passe ensuite, en t1, à une première phase d'essai I. Pendant cette première phase d'essai, le circuit de contrôle procède (étape F2) à la fermeture du second interrupteur 8 en lui appliquant des signaux de commande de fermeture (A2 = 1 dans le mode de réalisation représenté), tout en maintenant ouverts les premier et troisième interrupteurs (A1 = 0 et A3 = 0).

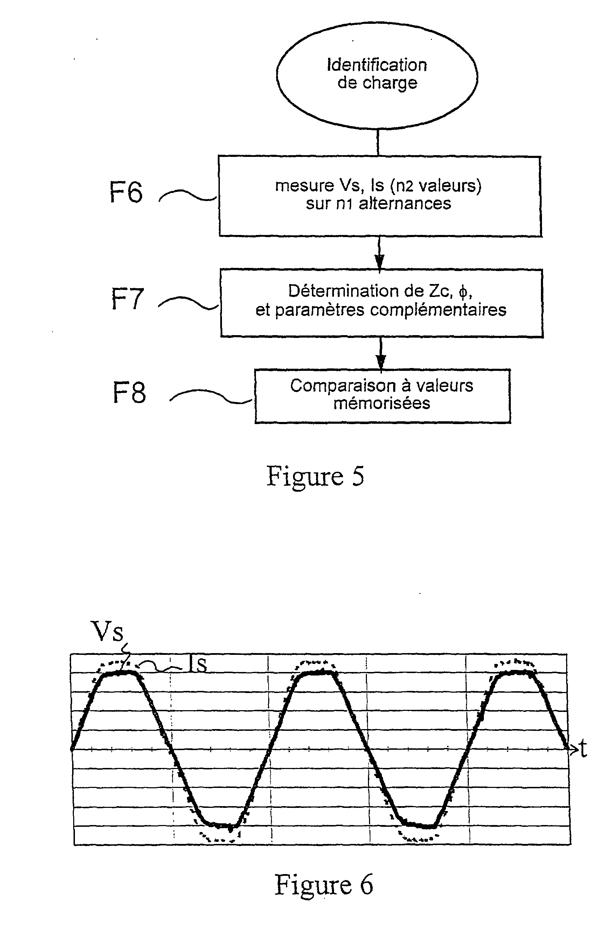

La première phase d'essai commence par une phase de détection de mise en service de la charge. En effet, la charge 5 peut, comme représenté à la figure 4, être raccordée aux bornes de sortie 3 et 4 par un interrupteur 12 de mise en service. Tant que cet interrupteur est ouvert, la charge, bien que présente, n'est pas mise en service. Pour détecter une mise en service, le circuit de contrôle 7 mesure (F3) la tension Vseff de sortie, puis compare (étape F4) la tension mesurée à une tension de seuil Vsseuil. Lorsque Vseff est inférieure ou égale à la tension de seuil, le circuit de contrôle considère que la charge est présente et que sa mise en service est commandée (interrupteur 12 fermé). Il passe alors (sortie oui de F4) à une phase d'identification de la nature de la charge. Par contre, tant que Vseff reste supérieure au seuil (sortie non de F4), la charge n'est pas considérée comme mise en service (interrupteur 12 ouvert) et le circuit de contrôle se reboucle sur l'étape F3.

Le schéma électrique équivalent de la figure 4 représente les tensions électriques appliquées à l'entrée et à la sortie du circuit pendant la première phase d'essai et, notamment, pendant la phase de détection de mise en service de la charge. L'interrupteur 8 étant fermé, c'est à dire conducteur, la tension Vr du réseau est appliquée aux bornes d'un circuit comportant, en série, la résistance R1, l'interrupteur 12 et la charge 5 d'impédance Zc. Tant que l'interrupteur 12 est ouvert (tl - t2), la tension de sortie Vs est égale à la tension Vr du réseau. La résistance R1 ayant une valeur élevée, le courant de court-circuit est dans tous les cas limité à une valeur faible non dangereuse. Lorsque la charge est mise en service par fermeture de l'interrupteur, à l'instant t2, la tension Vs diminue. Cette baisse est détectée par le circuit de contrôle 7 qui passe alors à la phase d'identification de la nature de la charge (étape F5).

A titre d'exemple non limitatif, si Vr=230V et R1=47kΩ, le courant efficace de court-circuit est limité à 5mA environ et la puissance maximale dissipée dans la résistance est de 1,2W. Si l'on suppose que toutes les charges pouvant être raccordées ont une puissance supérieure à 4W, c'est à dire une résistance de charge inférieure ou égale à 13,2 kΩ, alors la tension de seuil Vsseuil est fixée à :

$$\text{Vsseuil} = (230 \times 13, 2) / (47 + 13, 2) = 50{,}5V.$$

La mesure de Vseff est, de préférence, réalisée pour chaque demi-alternance. De cette manière la diminution de Vseff à partir de l'instant t2 est détectée dès l'instant t3 et la phase d'identification de la nature de la charge peut commencer dès le passage à zéro suivant de la tension, c'est à dire dès le début de l'alternance suivante, en t4. Si la valeur efficace Vseff de la tension de sortie est mesurée sur une alternance complète, dans le mode de réalisation de la figure 3, la phase de détection de mise en service de la charge se terminera à l'instant t4 et la phase suivante commencera à l'alternance suivante seulement. L'invention n'est pas limitée à l'utilisation de la valeur efficace Vseff de la tension de sortie. Il est possible d'utiliser la valeur moyenne ou, éventuellement, la valeur crête de la tension de sortie.

Un mode particulier de réalisation de l'étape F5 d'identification de la nature de la charge est représenté à la figure 5. Pendant toute cette étape, l'état des interrupteurs reste inchangé, c'est à dire l'interrupteur 8 est fermé et les interrupteurs 6 et 9 ouverts. La charge 5, en série avec la résistance R1 de forte valeur, est alimentée par la tension du réseau Vr sous un faible courant. Le courant étant limité à 5mA, l'application de la tension du réseau à la charge ne suffit pas à démarrer celle-ci, qu'elle soit linéaire ou non.

Dans une étape F6, le circuit de contrôle 7 mesure les valeurs instantanées de la tension de sortie Vs et du courant Is dans la charge pendant un nombre limité n1 d'alternances entières de la tension Vr du réseau. Le nombre n1 est de préférence de l'ordre de 4 ou 5 alternances. Sur la figure 3, cette étape, représentée entre les instants t4 et t5 comporte 4 alternances.

Le nombre de valeurs instantanées de Vs et Is mesurées pendant chaque alternance est un nombre prédéterminé n2, de l'ordre de quelques dizaines. Dans un mode de réalisation préférentiel, 40 valeurs de chaque grandeur sont mesurées et éventuellement mises en mémoire pendant chaque alternance. Bien que les signaux de tension et de courant mesurés ne reflètent pas exactement le fonctionnement nominal de la charge, ils sont néanmoins caractéristiques de la nature électrique des composants de la charge.

De même, la valeur de l'impédance de charge Zc pouvant être déterminée sous la forme d'une valeur moyenne du rapport des valeurs de tension et de courant mesurées lors de l'étape F6 ne correspond pas à l'impédance nominale de la charge, mais reste caractéristique de son impédance à froid.

Par ailleurs, le déphasage Ø entre le courant et la tension mesurés pendant l'étape F6 permet de déterminer si la charge est essentiellement de nature résistive (déphasage nul), inductive ou capacitive.

Ces deux grandeurs, Zc et déphasage Ø, sont déterminées par le circuit de contrôle 7 pendant une étape F7, puis comparées (F8) à des valeurs prédéterminées, mémorisées, représentatives de différents types de charge.

Dans le mode de réalisation particulier représenté à la figure 5, le circuit de contrôle détermine en outre, pendant l'étape F7, des paramètres complémentaires qui sont caractéristiques de la forme des signaux. Ces paramètres complémentaires peuvent par exemple être choisis parmi la puissance active, la puissance réactive, les valeurs moyennes du courant et/ou de la tension, les coefficients harmoniques si on entreprend une analyse de type Fourier, les facteurs de dissymétrie au niveau d'une alternance, l'évolution de la tension au cours des premières alternances, des critères rendant compte du caractère "créneau" ou "triangle" ou autre de la tension, ou encore l'énumération du nombre de passages à zéro de l'une et/ou de l'autre des ondes mesurées en phase.

Le nombre de paramètres utilisés peut être variable selon la précision d'identification souhaitée. Il réunit au moins les paramètres impédance apparente de la charge et déphasage entre le courant et la tension.

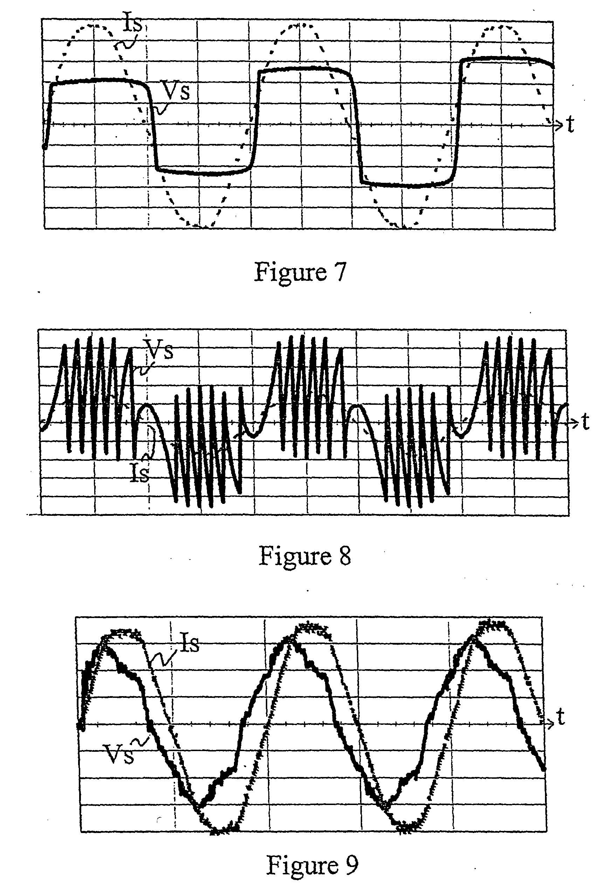

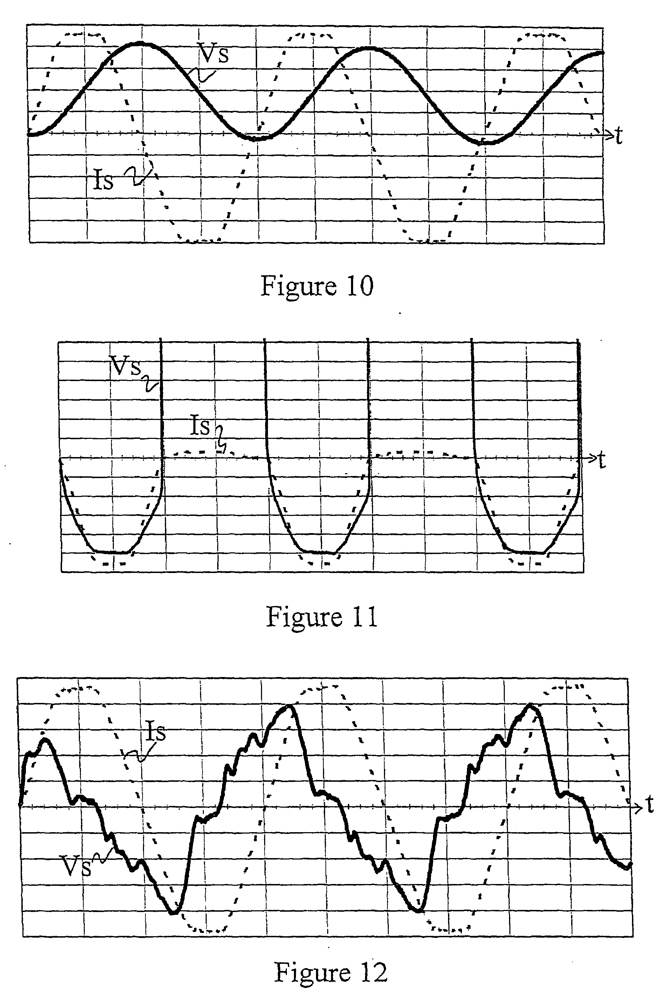

L'ensemble des paramètres décrits ci-dessus constitue une signature pour chaque type de charge à reconnaître. Les figures 6 à 12 illustrent les courbes caractéristiques de Vs et Is, sur 5 alternances, pour divers types de charge usuels, à savoir une résistance, par exemple une ampoule à incandescence (fig 6) ou un convecteur, une alimentation à découpage, par exemple du type rencontré sur un ordinateur (fig.7) ou tout autre matériel électronique, un gradateur, par exemple un gradateur de lampe halogène (fig 8), un moteur, par exemple de type électroménager (fig 9), une lampe fluorescente, par exemple une rampe de tubes néons (fig 10), une charge comportant un dispositif de redressement simple alternance, par exemple un sèche-cheveux à mi-puissance (fig. 11) ou un transformateur (fig. 12).

A titre d'exemple, dans le cas d'un moteur (fig 9), la charge se caractérise entre autres, par un déphasage négatif ainsi que par la présence d'harmoniques conférant une forme triangulaire à l'onde de tension. Par ailleurs, l'impédance mesurée est reliée à la puissance nominale de l'appareil. La valeur de l'impédance peut également servir à dissocier les moteurs des charges comportant un transformateur d'alimentation. En effet, pour les charges domestiques usuelles, l'impédance des transformateurs est généralement supérieure à l'impédance des moteurs.

Dans le cas d'une alimentation à découpage (fig. 7), la nature capacitive de la charge conduit à un déphasage positif. La charge progressive de la capacité, au travers d'un pont redresseur, se traduit par une augmentation des valeurs crête ou efficace de la tension au cours des premières alternances.

Dans le cas d'une charge comportant un dispositif de redressement simple alternance (fig. 11), la présence d'une diode induit un courant dont la valeur moyenne n'est pas nulle. Sur l'alternance correspondant à l'état passant de la diode, l'impédance est directement proportionnelle à la puissance nominale de la charge.

Dans le cas d'un système d'éclairage fluorescent (fig. 10), celui-ci est généralement compensé par un condensateur dont la valeur est fonction du courant nominal. Pendant la phase d'essai, le tube n'est pas amorcé et le circuit observé est principalement capacitif. Il se traduit donc par un déphasage positif proche de 90° (sin Ø ≈ 1). La charge de la capacité à partir de conditions initiales de courant et tension nulles, se traduit par ailleurs par une valeur moyenne de la tension non-nulle.

Les charges purement résistives (fig. 6) se caractérisent par un déphasage nul, et l'impédance observée est directement proportionnelle à la puissance nominale. Toutefois, compte-tenu de la faible énergie mise en jeu, la première phase d'essai ne permet pas de dissocier les résistances chauffantes des résistances correspondant au filament des lampes à incandescence par exemple. Cette distinction peut être réalisée pendant une étape d'identification fine qui sera décrite plus en détail ultérieurement.

D'autres types de charge peuvent, selon le même principe, être identifiées. Il suffit pour cela que les critères complémentaires qui les caractérisent, en complément de l'impédance et du déphasage, soient connus et pris en compte par le circuit de contrôle 7 pendant les étapes F7 et F8. C'est, par exemple, le cas des systèmes à gradateurs comportant un dispositif de gradation par triac (fig. 8), qui se caractérisent par une impédance élevée et qui peuvent présenter un nombre élevé de passages à zéro de la tension.

L'utilisation, pour l'identification de la nature de la charge, de l'impédance de charge Zc et du déphasage permet tout d'abord de distinguer les charges résistives, inductives et capacitives. Elle permet également de faire la différence entre un moteur et un transformateur, ainsi qu'entre le corps humain et d'autres types de charge résistifs.

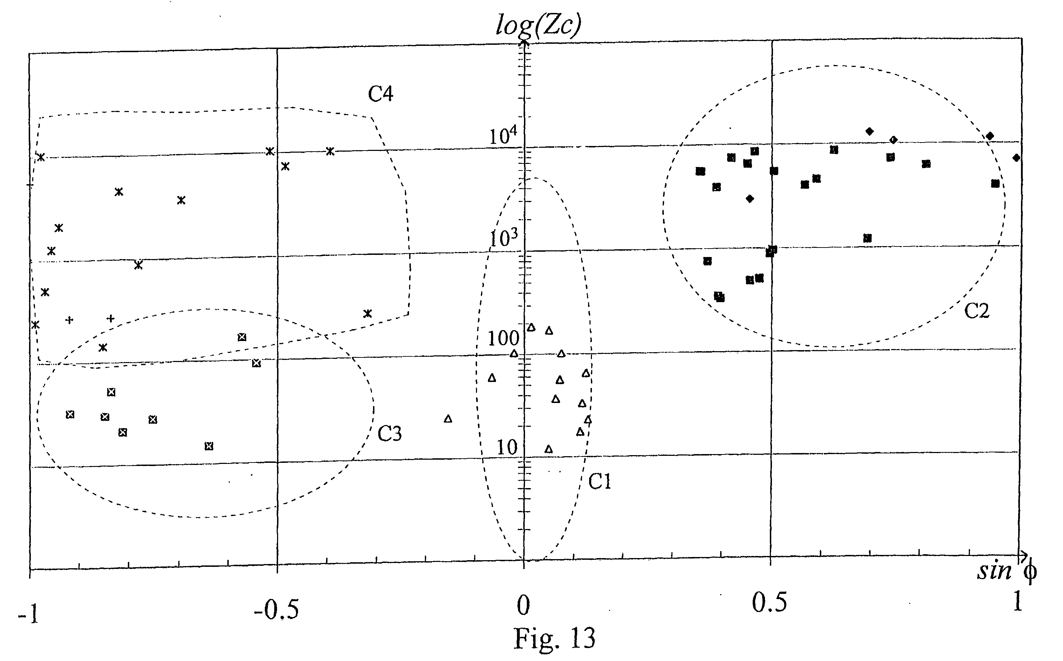

La figure 13, qui représente log Zc en fonction de sin Ø, pour différents types de charge usuels, permet de mieux comprendre ces distinctions. En effet, sur cette figure, les points représentatifs de résistances, représentés par un triangle, sont regroupés dans une zone C1, dans laquelle le déphasage est voisin de zéro. Les points représentatifs de gradateurs et d'alimentations à découpage, respectivement représentés par des losanges et des carrés, sont regroupés dans une zone C2, dans laquelle le déphasage est positif. Les différences d'impédance entre ces deux types de charge capacitive ne permettent généralement pas de les distinguer et certains des paramètres complémentaires mentionnés plus haut sont utilisés dans ce but. Pour les tubes fluorescents, le sin Ø est voisin de 1.

Les moteurs représentés par le signe " x ", sont regroupés dans une zone C3, les transformateurs, représentés par le signe " ∗ " et des diodes représentées par le signe "+" sont regroupées dans une zone C4. Les zones C3 et C4 sont toutes deux représentatives d'une charge inductive, mais pour les charges domestiques habituelles, l'impédance des transformateurs est supérieure à celle des moteurs, ce qui permet de les distinguer.

La comparaison des impédances permet également de distinguer le corps humain dont l'impédance est très élevée (très largement au dessus de la zone C1) des autres charges résistives habituelles qui sont dans la zone C1.

La comparaison des différents paramètres à des valeurs connues pendant l'étape F8 peut s'effectuer par toute technique connue, notamment par des techniques de classification. Le circuit de contrôle 7 peut ainsi utiliser, par exemple, des algorithmes de comparaison à des charges connues ou des méthodes graduelles, comme la comparaison à un nombre prédéterminé K de plus proches voisins.

La durée des étapes F7 et F8 dépend des capacités de traitement du circuit de contrôle et du nombre et de la précision des paramètres utilisés pour l'identification de la nature de la charge. Sur la figure 3, un temps de calcul et d'identification supplémentaire a été schématisé entre les instants t5 et t6. Il est souhaitable que ce temps de calcul soit inférieur à une période de la tension du réseau, soit 20 ms pour un réseau à 50 Hz. Entre ces instants t5 et t6, la tension du réseau peut continuer à être appliquée à la charge 5 par l'intermédiaire de la résistance R1, comme pendant la première phase d'essai I. Le circuit de contrôle peut également ouvrir l'interrupteur 8, interrompant ainsi toute alimentation de la charge.

Après l'identification de la nature de la charge (fig. 2, F5), le circuit de contrôle passe à une seconde phase d'essai II, (fig. 3) pendant laquelle des impulsions de tension, d'amplitude limitée, sont appliquées à la charge. Pour cela (étape F9), il maintient ouvert l'interrupteur 6 (A1 = 0), ferme l'interrupteur 9 (A3 = 1) et ferme temporairement l'interrupteur 8 pour appliquer à la charge la tension du réseau pendant une durée prédéterminée limitée du cycle de Vr, de manière à ce que la tension instantanée Vs appliquée à la charge reste inférieure à une tension pic Vp prédéterminée très inférieure à la tension crête du réseau. De cette manière, la charge 5 reste alimentée pendant cette phase sous une faible puissance. Pour cela, les signaux de commande A2 sont des signaux logiques qui commandent la fermeture de l'interrupteur 8 avec un déphasage prédéterminé par rapport au passage à zéro de la tension Vr du réseau.

Pour assurer la synchronisation des signaux A2 sur la tension du réseau, celle-ci est appliquée à une entrée du circuit de contrôle 7 (fig. 1).

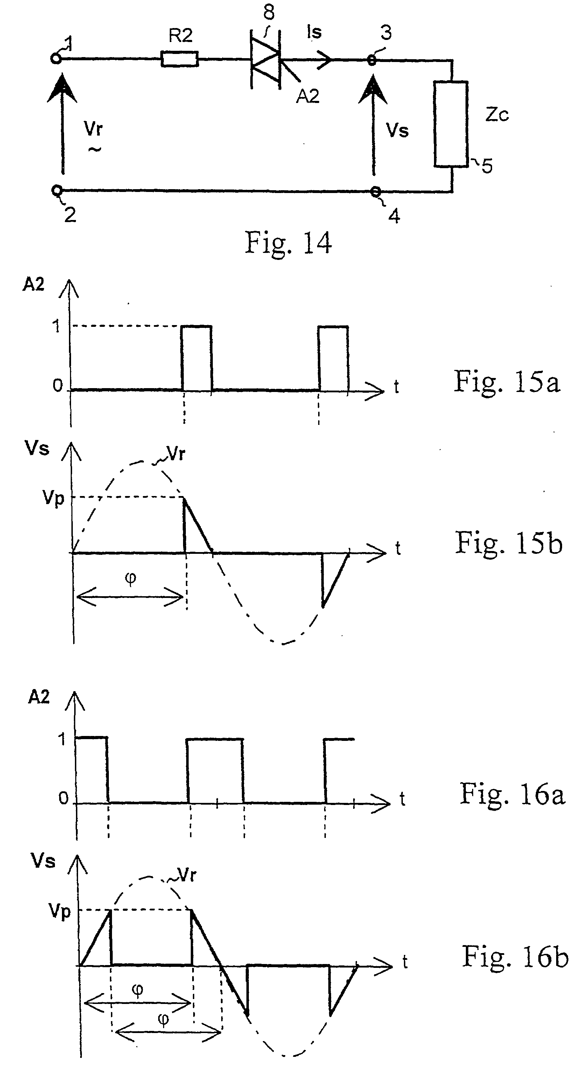

La figure 14 représente le schéma électrique équivalent du circuit pendant la seconde phase d'essai II. Le troisième interrupteur 9 étant fermé, la résistance R1 est en parallèle sur l'ensemble constitué par R2 et l'interrupteur 9. Cependant, les valeurs respectives de R1 et R2 sont telles que la résistance R1 ne joue aucun rôle et peut être négligée. A titre d'exemple non limitatif, R2 est de l'ordre d'1 ohm.

Dans le cas d'un triac 8, les signaux A2 sont, de préférence, tels que représentés à la figure 15a, ce qui fournit en sortie des signaux Vs tels que représentés à la figure 15b. Sur la figure 15b, la tension Vr du réseau est représentée en pointillés. Une impulsion A2 de valeur logique 1 est appliquée à l'électrode de commande du triac 8 avec un déphasage Ø par rapport à chaque passage à zéro de la tension Vr du réseau. Le triac 8 est donc conducteur pendant un court instant de chaque alternance, entre l'application de l'impulsion A2 et le passage à zéro suivant de Vr, la tension instantanée Vs restant, en valeur absolue, inférieure à la tension pic Vp (fig. 15b).

Pour une valeur efficace de 230V de la tension Vr du réseau, la tension pic Vp est de préférence inférieure à 50 V. Dans un mode de réalisation préférée Vp = 20 V. L'angle Ø de déphasage peut alors être calculé par l'équation :

$$Vp = 230 \ \sqrt{2} \ sin Ø$$

soit Ø = 176°, ce qui pour une fréquence du réseau de 50 Hz correspond à un déphasage de 9,8 ms. A titre d'exemple, si Vp = 20 V, le courant dans le triac est limité à 20A en cas de court-circuit si la résistance de protection R2 est de 1 ohm.

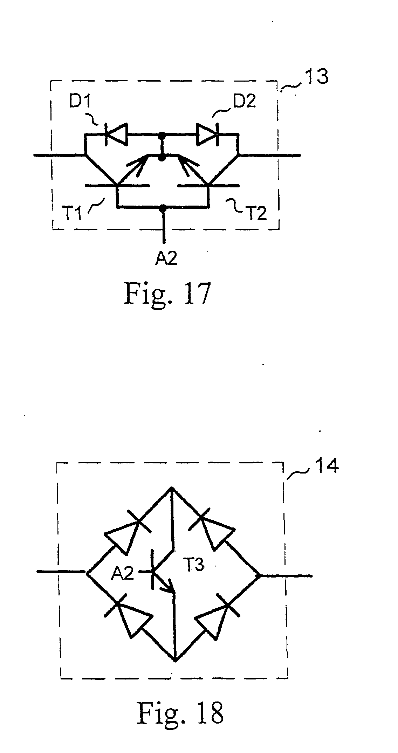

Dans le mode de réalisation des figures 15a et 15b, à chaque période de Vr, deux fractions de sinusoïde de signes opposés sont appliquées à la charge. Ceci se justifie en présence de charges asymétriques. Par ailleurs, si l'interrupteur électronique est réalisé avec des transistors, comme sur les figures 17 et 18 qui seront décrites plus en détail ci-dessous, les signaux A2 peuvent être du type représenté à la figure 16a. Dans ce cas A2 prend, comme précédemment, la valeur logique 1 après un déphasage Ø. Cependant, l'interrupteur ne s'ouvre pas automatiquement au passage à zéro de la tension du réseau, mais son ouverture, ou blocage, est commandée par le passage de A2 à la valeur logique zéro, de préférence avec le même déphasage Ø par rapport au passage à zéro suivant de Vr. On obtient ainsi pour Vs la forme d'onde représentée à la figure 16b.

Le triac des figures 1 et 14 peut être remplacé par tout interrupteur électronique approprié. Un mode particulier de réalisation de l'interrupteur 8 est représenté par l'interrupteur électronique 13 de la figure 17. Il est constitué par deux transistors T1 et T2 dont les émetteurs sont connectés à un point commun et dont les bases sont connectées pour former l'électrode de commande de l'interrupteur, recevant les signaux A2 de commande. Les collecteurs de T1 et T2 constituent respectivement l'entrée et la sortie de l'interrupteur électronique 13. Les anodes de diodes D1 et D2 sont connectées aux émetteurs de T1 et T2, tandis que leurs cathodes sont respectivement connectées aux collecteurs de T1 et T2.

Un autre mode particulier de réalisation de l'interrupteur 8 est représenté par l'interrupteur électronique 14 de la figure 18. Il est constitué par un pont de diodes dont une diagonale est connectée entre l'entrée et la sortie de l'interrupteur. Un transistor T3, dont la base reçoit les signaux A2 de commande, est connecté dans l'autre diagonale du pont de diodes.

Pendant la seconde phase d'essai II (fig. 3), l'étape F9 (fig.2) est suivie d'une étape F10 de mesure du courant Is, de la tension Vs et du courant différentiel Id. L'étape F10 peut être suivie d'une étape F11 d'identification fine de certaines charges. Le circuit de contrôle passe ensuite à une étape F12 de détection de court-circuit. En l'absence de court-circuit (sortie non de F12) le circuit de contrôle poursuit son programme d'essai. Par contre, si un court-circuit est détecté (sortie oui de F12), alors le circuit de contrôle passe à une étape F13 de signalisation de défaut, signalant le court-circuit avant de revenir à l'étape F1. En l'absence de court-circuit détecté (sortie non de F12), le circuit de contrôle passe à une étape de détection de défaut différentiel. Si un défaut différentiel est détecté (sortie oui de F14), le circuit de contrôle passe à l'étape F13 de signalisation de défaut, signalant le défaut différentiel avant de revenir à l'étape F1. En l'absence de défaut différentiel (sortie non de F14), le circuit de contrôle passe à une étape F15 de détection de surcharge. Si une surcharge est détectée (sortie oui de F15) il passe à l'étape F13 de signalisation de défaut, signalant la surcharge. Sinon (sortie non de F15), il passe, éventuellement par l'intermédiaire d'une étape F16 de démarrage progressif, à une étape F17 de fonctionnement permanent (phase III de la figure 3). Pendant l'étape de démarrage progressif, le circuit de contrôle réalise une fermeture progressive de l'interrupteur 6 adaptée au type de charge détecté. Pendant l'étape F17 la tension Vr du réseau est appliquée en permanence à la charge 5, par l'intermédiaire du premier interrupteur 6 (A1 = 1, A2 = A3 = 0).

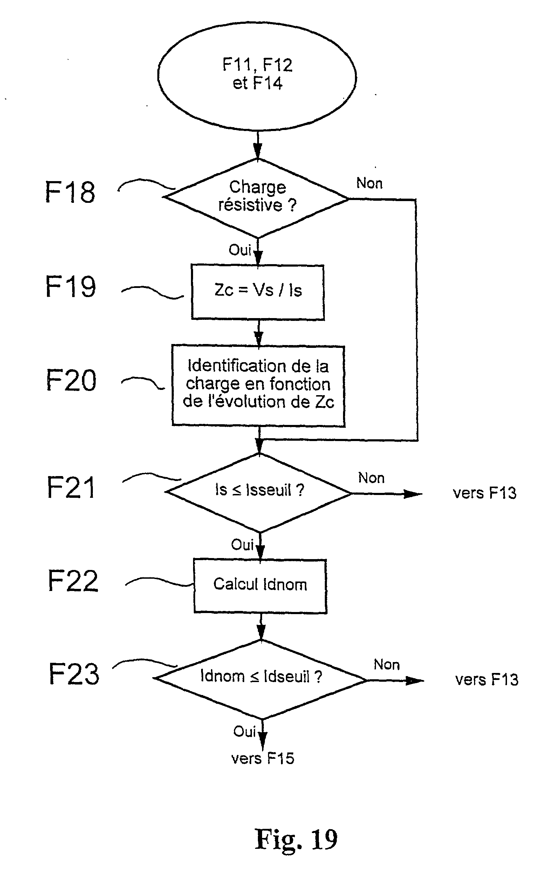

Dans le mode de réalisation particulier des étapes F11, F12 et F14 représenté à la figure 19, une identification fine du type de charge est réalisée dans le cas des charges résistives. En effet, comme indiqué plus haut, la première phase d'essai ne permet pas de faire la distinction entre des résistances pures et des résistances correspondant au filament d'une lampe à incandescence par exemple. La seconde phase d'essai, pendant laquelle la charge est alimentée sous tension réduite, mais sans limitation de courant, permet d'effectuer une telle distinction. Dans une étape F18, le circuit de contrôle vérifie si la charge est de type résistif. Si c'est la cas (sortie oui de F18), il effectue l'identification fine. Pour cela, il détermine (F19) l'impédance de charge Zc = Vs/Is pendant la seconde phase d'essai, puis identifie la charge en fonction de l'évolution de Zc. En effet, la puissance mise en jeu étant supérieure à celle mise en jeu dans la première phase d'essai, l'impédance d'une ampoule augmente, tandis que l'impédance des résistances pures reste inchangée.

Après l'étape F20, ou après l'étape F18, si la charge n'est pas résistive, l'étape de détection d'un court-circuit peut être réalisée (F21) par comparaison de Is à un seuil de courant Isseuil. Si le courant Is est inférieur ou égal au seuil de courant, cela est interprété comme une absence de court-circuit et le circuit de contrôle poursuit son programme d'essai. Par contre, si Is est supérieur au seuil de courant, alors (sortie non de F21), la charge est considérée comme présentant un court-circuit. Le circuit de contrôle passe alors à l'étape F13 de signalisation de défaut.

A titre d'exemple, on peut prendre 5 ohms comme résistance limite de court-circuit pour la charge, ce qui correspond à une puissance supérieure à 10kW. Dans ce cas, le seuil de courant de détection de court-circuit est donné par l'équation :

$$Isseuil = Vp / (Rcourt\text{-}circuit + R2)$$

soit

$$Isseuil = 20/(5+1) = 3,3A.$$

Pour la détection d'un défaut différentiel, on considère qu'un courant différentiel de défaut varie linéairement avec la tension appliquée et, en conséquence, que le courant différentiel sous tension nominale peut être estimé par une mesure sous tension réduite.

La mesure du courant différentiel ayant été effectuée à l'étape F10, dans le mode particulier de réalisation de la figure 19 le circuit de contrôle calcule le courant différentiel Idnom sous tension nominale pendant une phase F22 et compare Idnom à un seuil de courant différentiel Idseuil pendant une phase F23. Si Idnom est inférieur ou égal au seuil Idseuil, le circuit de contrôle considère qu'il n'y a pas de défaut différentiel et le circuit de contrôle poursuit son programme d'essai. Par contre, si Idnom est supérieur au seuil Idseuil, alors (sortie non de F23), un défaut différentiel est détecté et le circuit de contrôle passe à l'étape F13 de signalisation de défaut, signalant un défaut différentiel. A titre d'exemple, avec le montage des figures 14 et 19, pour une charge de 10 kW, soit 5 ohms, la tension Vp minimale aux bornes de la charge est donnée par (20 x 5) / (5 +1 ) = 16,7 V. Le courant différentiel sous tension nominale (230V) est donné par : Idnom = 230 Id. Le seuil de protection Idseuil est par exemple fixé à 30 mA.

Au lieu d'utiliser directement les mesures de Is et Id pour la détection d'un court-circuit ou d'un défaut différentiel, il est possible d'utiliser les valeurs correspondantes de l'impédance de charge calculées à partir des valeurs mesurées de Is, Vs et Id. Ceci permet notamment de s'affranchir des variations éventuelles de l'amplitude de la tension du réseau.

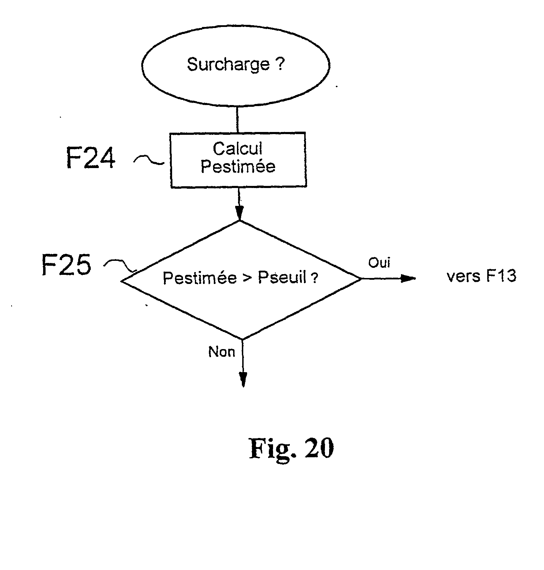

Pour la détection préventive d'une surcharge éventuelle (F15, fig. 2), le circuit de contrôle tient compte de la nature de la charge qui vient d'être identifiée. Comme représenté à la figure 20, la détection de la surcharge commence par une étape F24 de calcul de la puissance nominale estimée Pestimée de la charge. Puis dans une étape F25 il compare Pestimée avec un seuil de puissance prédéterminé Pseuil qui correspond à la puissance nominale disponible à la sortie du dispositif, mise en mémoire dans le circuit de contrôle. Si la puissance estimée est supérieure au seuil de puissance, le circuit de contrôle considère qu'il y a surcharge. Sinon (sortie non de F25), il passe à partir de l'instant t8 (fig. 3) à l'étape de fonctionnement permanent F17, éventuellement après une étape de démarrage progressif F16 (fig. 2).

L'estimation de la puissance nominale de la charge est adaptée au type de charge identifié précédemment par le circuit de contrôle. L'estimation est effectuée à partir des mesures du courant Is et de la tension Vs effectuées pendant les étapes précédentes. La nature de la charge détermine les mesures pouvant être utilisées.

Dans le convecteur, l'impédance de la charge est constante et identique à froid et à chaud. La tension Vr nominale du réseau (ex : 230 V) étant connue, la puissance nominale peut être calculée à partir de la valeur R de la résistance (impédance Zs) calculée (F7, figure 5) à partir des mesures effectuées (en F6) pendant la phase d'identification de charge. La valeur de la résistance R du convecteur peut également être obtenue éventuellement en F19 (fig. 19) à partir de la mesure (en F10) du courant Is réalisée pendant la seconde phase d'essai. Pestimée est donnée par : Pestimée = $Vr^2/R$.

Dans le cas d'une ampoule à incandescence, la puissance nominale estimée est de l'orde de 1/13 de la puissance à froid Pf, soit Pestimée = Pf/13 = $Vr^2$ / (13Rf), où Rf représente la résistance à froid du filament de l'ampoule. La valeur de Rf peut être calculée (F7, éventuellement F19) à partir des mesures réalisées en F6 pendant la première phase d'essai ou en F10 pendant la seconde phase d'essai.

Dans le cas d'une lampe fluorescente, par exemple un tube néon, celle-ci est généralement compensée par un condensateur dont la valeur est fonction du courant nominal. Pendant la seconde phase d'essai, le tube n'est pas amorcé et le courant Is mesuré pendant l'étape F10 est principalement le courant capacitif. Celui-ci permet d'obtenir une mesure Zf de l'impédance à froid. La puissance nominale estimée Pestimée est ensuite calculée à partir de Zf :

$$\text{Pestimée} \approx Vr^2/Zf = (230)^2/Zf$$

Dans le cas d'un moteur, le calcul de la puissance nominale est effectué à partir de la puissance mesurée à froid au cours de la première phase d'essai.

A titre d'exemple, le démarrage progressif adapté peut consister en une commande de phase par triac pour une charge inductive ou en une commande par interruption de phase pour une charge capacitive.

La durée des étapes F11, F12, F14 et F15 dépend des capacités de traitement du circuit de contrôle. Sur la figure 3 une période de traitement supplémentaire a été schématisée entre les instants t7 et t8 à la fin de la seconde phase d'essai II qui dure de préférence deux périodes de Vr. Il est souhaitable que ce temps de calcul soit le plus faible possible. Pendant cette période de traitement, le circuit de contrôle peut interrompre toute alimentation de la charge. Dans un mode de réalisation préférentiel, la détection de la mise en service d'une charge, son identification et la détection préventive de défaut s'effectuent en moins de 200ms.

La détection préventive de défauts, notamment d'un défaut différentiel, de court-circuit ou de surcharge, avant l'application d'une tension nominale du réseau sur une charge permet de réduire le nombre de manoeuvres d'un appareil de coupure disposé en amont et destiné à assurer la protection du réseau et/ou de la charge en fonctionnement permanent, c'est à dire d'assurer la sélectivité de l'ensemble et de réduire l'usure de l'appareil de coupure. De plus, cela permet d'améliorer la sécurité des personnes et du matériel. Cela rend également possible un réenclenchement automatique d'un appareil de coupure muni d'un tel dispositif, ce qui permet d'assurer une meilleure continuité de service.

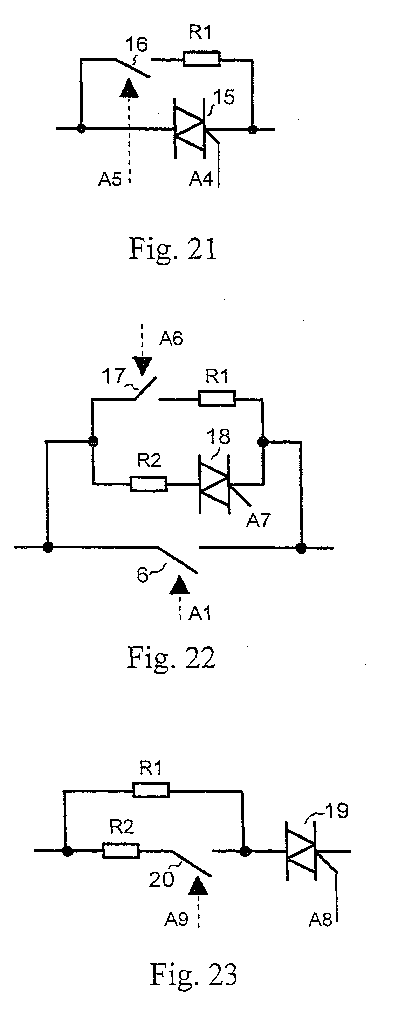

L'invention n'est pas limitée au circuit de commutation du dispositif représenté à la figure 1. Dans une première variante, représentée à la figure 21, un interrupteur électronique 15, constitué par exemple par un triac, commandé par des signaux de commande A4 du circuit de contrôle 7, est connecté entre les bornes 1 et 3 en parallèle avec un interrupteur 16, commandé par des signaux de commande A5 et connecté en série avec la résistance R1. Pendant la première phase d'essai, A4 = 0 et A5 = 1, de manière à alimenter la charge 5 sous faible courant. Puis, pendant la seconde phase d'essai, A4 = 1 avec le déphasage Ø et A5 = 0, pour appliquer à la charge des impulsions limitées en tension. En fonctionnement permanent, A4 = 1 et A5 = 0. Un tel circuit de commutation peut être utilisé à condition que l'interrupteur électronique 15 puisse supporter la tension du réseau.

Dans une seconde variante, représentée à la figure 22, le circuit de commutation comporte, comme sur la figure 1, un premier interrupteur 6 commandé par les signaux A1. Le premier interrupteur 6 est connecté en parallèle avec un interrupteur 17 en série avec la résistance R1, l'interrupteur étant commandé par des signaux A6. Un circuit série constitué par un interrupteur électronique 18 en série avec la résistance R2 est également connecté en parallèle sur l'interrupteur 6. Des signaux A7 de commande contrôlent l'interrupteur 18. Pendant la première phase d'essai, A1 = A7 = 0 et A6 = 1, tandis que pendant la seconde phase d'essai A1 = A6 = 0 et A7 = 1 avec le déphasage Ø. En fonctionnement permanent, A1 = 1 et A6 = A7 = 0.

Dans une troisième variante, représentée à la figure 23, un interrupteur électronique 19, contrôlé par des signaux de commande A8, est connecté en série avec un interrupteur additionnel 20, commandé par des signaux A9, entre les bornes 1 et 3. Une résistance R2 de faible valeur peut éventuellement être connectée en série avec l'interrupteur additionnel 20. La résistance R1 est connectée en parallèle sur l'ensemble R2 - interrupteur 20. Pendant la première phase d'essai A8 = 1 et A9 = 0, tandis que pendant la seconde phase d'essai A8 = 1, avec le déphasage Ø, et A9 = 1. En fonctionnement permanent A8 = A9 = 1.

Dans tous les modes de réalisation représentés ci-dessus les moyens de commutation, connectés entre les bornes 1 et 3, comportent des moyens de connexion (8, 16, 17, 19) pour connecter la charge au réseau par l'intermédiaire de la résistance de limitation R1 de forte valeur pendant la première phase d'essai. Il comportent également toujours un interrupteur électronique (8, 15, 18, 19) pouvant être fermé temporairement pendant la seconde phase d'essai de manière à appliquer à la charge la tension du réseau pendant une durée limitée du cycle de Vr.

Les interrupteurs (6, 9, 16, 17, 20) qui ne sont pas représentés sous forme électronique peuvent être constitués par des contacts mécaniques ou par des interrupteurs de type électronique.

## Revendications

1. Dispositif de détection préventive de défauts dans une charge (5) connectée à un réseau d'alimentation électrique alternatif par l'intermédiaire de moyens de commutation comportant un premier interrupteur (6 ; 15 ; 19), dispositif comportant des moyens (7) de contrôle des moyens de commutation, les moyens de contrôle comportant des moyens d'indentification du type de charge, des moyens de détection de défaut avec des moyens d'essai pour connecter temporairement la charge à des moyens d'alimentation d'essai, et des moyens (10) de mesure courant (Is) dans la charge, dispositif **caractérisé en ce que** :

   - les moyens de commutation comportent des moyens (8 ; 16; 17 ; 19) de connexion de la charge (5) au réseau par l'intermédiaire d'une impédance de limitation (R1) de forte valeur;
   - les moyens de contrôle comportent des moyens d'actionnement des moyens de connexion pendant une première phase d'essai (I);
   - les moyens de contrôle comportent des moyens de mesure de la tension (Vs) de sortie du dispositif;
   - les moyens d'identification du type de charge comportent des moyens (F6) de mesure d'un nombre prédéterminé (n2) de valeurs du courant (Is) et de la tension (Vs) instantanés dans la charge pendant un nombre (n1) limité d'alternances de la tension (Vr) du réseau, ledit nombre prédéterminé (n2) étant de l'ordre de quelques dizaines de valeurs par alternance;
   - les moyens d'identification du type de charge comportent des moyens de détermination du déphasage courant/tension (Ø) dans la charge et de calcul de l'impédance de charge (Zc), à partir des courants et tensions instantanés mesurés, et des moyens de comparaison du déphasage et de l'impédance à des valeurs prédéterminées représentatives de différents types de charge.

2. Dispositif selon la revendication 1, **caractérisé en ce que** l'impédance de limitation est une résistance.

3. Dispositif selon l'une des revendications 1 et 2, **caractérisé en ce que** les moyens d'identification du type de charge comportent des moyens de détermination, à partir des tensions (Vs) et courants (Is) instantanés mesurés, de paramètres électriques complémentaires représentatifs de la charge, et des moyens de comparaison des paramètres complémentaires à des valeurs prédéterminées représentatives de différents types de charge.

4. Dispositif selon la revendication 3, **caractérisé en ce que** les paramètres complémentaires sont choisis parmi la puissance active, la puissance réactive, les valeurs moyennes du courant et/ou de la tension, les coefficients harmoniques, les facteurs de dissymétrie au niveau d'une alternance, l'évolution de la tension au cours des premières alternances, la forme de la tension, le nombre de passages à zéro du courant et/ou de la tension.

5. Dispositif selon l'une quelconque des revendications 1 à 4, **caractérisé en ce que** les moyens de commutation comportent un interrupteur électronique (8 ; 15 ; 18 ; 19) et **en ce que**, pendant une seconde phase d'essai (II), les moyens de contrôle (7) ferment temporairement l'interrupteur électronique de manière à appliquer à la charge (5) la tension alternative du réseau pendant une durée limitée du cycle de la tension (Vr) du réseau, de manière à ce que la tension instantanée (Vs) appliquée à la charge reste, pendant la seconde phase d'essai, inférieure à une tension pic (Vp) prédéterminée très inférieure à la tension crête du réseau.

6. Dispositif selon la revendication 5, **caractérisé en ce que** le type de charge détecté étant une charge résistive, les moyens d'identification du type de charge comportent des moyens de détermination de l'impédance de charge pendant la seconde phase d'essai (II) et des moyens d'identification fine de la nature de la charge résistive.

7. Dispositif selon l'une des revendications 5 et 6, **caractérisé en ce que** les moyens de détection de défaut comportent des moyens de détection de court-circuit comportant des moyens de comparaison à un seuil de courant (Isseuil) prédéterminé du courant (Is) mesuré dans la charge pendant la seconde phase d'essai, et des moyens de signalisation d'un court-circuit si le courant mesuré excède ledit seuil de courant.

8. Dispositif selon l'une quelconque des revendications 5 à 7, **caractérisé en ce que** les moyens de détection de défaut comportent des moyens de détection de défaut différentiel comportant des moyens (11) de mesure du courant différentiel (Id) pendant la seconde phase d'essai, des moyens de comparaison du courant différentiel à un seuil de courant différentiel (Idseuil) prédéterminé, et des moyens de signalisation d'un défaut différentiel si le courant différentiel mesuré excède le seuil de courant différentiel.

9. Dispositif selon l'une quelconque des revendications 1 à 8, **caractérisé en ce que** les moyens de détection de défaut comportent des moyens de détection d'une surcharge comportant des moyens d'estimation de la puissance nominale de la charge (Pestimée) adaptés au type de charge détecté, des moyens de comparaison de la puissance nominale estimée à un seuil de puissance prédéterminé (Pseuil), représentatif de la puissance disponible en sortie du dispositif, et des moyens de signalisation d'une surcharge si la puissance nominale estimée excède le seuil de puissance.

10. Dispositif selon l'une quelconque des revendications 1 à 9, **caractérisé en ce qu'**il comporte des moyens de détection de la présence d'une charge pendant la première phase d'essai, lesdits moyens comportant des moyens de comparaison de la tension (Vseff) de sortie à un seuil de tension prédéterminé (Vsseuil), les moyens de contrôle (7) effectuant l'identification du type de charge et la détection de défaut lorsque la tension (Vseff) de sortie est inférieure ou égale audit seuil de tension (Vsseuil).

11. Dispositif selon l'une quelconque des revendications 1 à 10, **caractérisé en ce que** les moyens de contrôle (7) réalisent une fermeture progressive du premier interrupteur (6 ; 15 ; 19) adapté au type de charge détecté lorsqu'aucun défaut n'a été détecté.

12. Dispositif selon l'une quelconque des revendications 1 à 11, **caractérisé en ce que** les moyens de connexion comportent un interrupteur (8 ; 16 17) connecté, en série avec l'impédance (R1) de limitation de forte valeur, en parallèle sur le premier interrupteur (6 ; 15).

13. Dispositif selon la revendication 12, **caractérisé en ce que** l'interrupteur (8) des moyens de connexion est un interrupteur électronique, l'impédance (R1) de limitation étant connectée en parallèle avec un circuit constitué par une résistance de protection (R2) de faible valeur connectée en série avec un interrupteur supplémentaire (9) fermé pendant la seconde phase d'essai (II).

14. Dispositif selon l'une quelconque des revendications 5 à 11, **caractérisé en ce que** l'interrupteur électronique (15) constitue le premier interrupteur.

15. Dispositif selon l'une quelconque des revendications 5 à 11 **caractérisé en ce que** l'interrupteur électronique (18) est connecté, en série, avec une résistance de protection (R2) de faible valeur, en parallèle sur le premier interrupteur.

16. Dispositif selon l'une quelconque des revendications 5 à 11, **caractérisé en ce que** le premier interrupteur comporte l'interrupteur électronique (19) en série avec un interrupteur additionnel (20) ouvert pendant la première phase d'essai (I) et fermé pendant la seconde phase d'essai (II), l'impédance (R1) de limitation de forte valeur étant connectée en parallèle sur l'interrupteur additionnel (20).

17. Dispositif selon l'une quelconque des revendications précédentes, **caractérisé en ce que** le nombre (n1) d'alternances utilisées pour l'identification de la charge pendant la première phase d'essai est de l'ordre de 4 ou 5.

18. Dispositif selon l'une quelconque des revendications précédentes, **caractérisé en ce que** le nombre (n2) de valeurs de courant et de tension mesurées pour l'identification de la charge pendant la première phase d'essai est de l'ordre de 40.

**Claims**

1. A device for preventive detection of faults in a load (5) connected to an AC electrical power supply system by means of switching means comprising a first switch (6; 15; 19), a device comprising control means (7) of the switching means, the control means comprising means for identifying the type of load, fault detection means with test means to temporarily connect the load to test power supply means, and means (10) for measuring the current (Is) in the load, a device **characterized in that**:

   - the switching means comprise means (8; 16; 17; 19) for connecting the load (5) to the mains power system by means of a limiting impedance (R1) of high value;
   - the control means comprise means for actuating the connecting means during a first test phase(I);
   - the control means comprise means for measuring the output voltage (Vs) of the device;
   - the means for identifying the type of load comprise means (F6) for measuring a preset number (n2) of values of the instantaneous current (Is) and voltage (Vs) in the load during a limited number (n1) of half-waves of the mains power system voltage (Vr), said preset number (n2) being about a few tens of values per half wave;
   - the means for identifying the type of load comprise means for determining the current/voltage phase shift (Ø) in the load and for calculating the load impedance (Zc) from the measured instantaneous currents and voltages, and means for comparing the phase shift and impedance with preset values representative of different types of load.

2. The device according to claim 1, **characterized in that** the limiting impedance is a resistor.

3. The device according to one of the claims 1 and 2, **characterized in that** the means for identifying the type of load comprise means for determining, from the measured instantaneous voltages (Vs) and currents (Is), complementary electrical parameters of the load, and means for comparing the complementary parameters with preset values representative of different types of load.

4. The device according to claim 3, **characterized in that** the complementary parameters are chosen from the active power, reactive power, mean current and/or voltage values, harmonic coefficients, dissymmetry factors at the level of a half-wave, evolution of the voltage in the course of the first half-waves, form of the voltage, and number of times the current and/or voltage cross zero.

5. The device according to any one of the claims 1 to 4, **characterized in that** the switching means comprise an electronic switch (8; 15; 18; 19) and that, during a second test phase (II), the control means (7) close the electronic switch temporarily so as to apply the AC voltage of the mains power system to the load (5) during a limited period of the cycle of the mains power system voltage (Vr) so that the instantaneous voltage (Vs) applied to the load remains, during the second test phase, lower than a preset peak voltage (Vp) much lower than the peak voltage of the mains power system.

6. The device according to claim 5, **characterized in that** the type of load detected being a resistive load, the means for identifying the type of load comprise means for determining the load impedance during the second test phase (II) and means for fine identification of the nature of the resistive load.

7. The device according to one of the claims 5 and 6, **characterized in that** the fault detection means comprise means for detecting a short-circuit comprising means for comparing the current (Is) measured in the load during the second test phase with a preset current threshold (Isthresh), and means for indicating a short-circuit if the current measured exceeds said current threshold.

8. The device according to any one of the claims 5 to 7, **characterized in that** the fault detection means comprise means for detecting a differential fault comprising means (11) for measuring the differential current (Id) during the second test phase, means for comparing the differential current with a preset differential current threshold (Idthresh), and means for indicating a differential fault if the differential current measured exceeds the differential current threshold.

9. The device according to any one of the claims 1 to 8, **characterized in that** the fault detection means comprise means for detecting an overload comprising means for estimating the nominal power of the load (Pest) adapted to the type of load detected, means for comparing the estimated nominal power with a preset power threshold (Pthresh) representative of the power available on output of the device, and means for indicating an overload if the estimated nominal power exceeds the power threshold.

10. The device according to any one of the claims 1 to 9, **characterized in that** it comprises means for detecting the presence of a load during the first test phase, said means comprising means for comparing the output voltage (Vsrms) with a preset voltage threshold (Vsthresh), the control means (7) performing identification of the type of load and fault detection when the output voltage (Vsrms) is lower than or equal to said voltage threshold (Vsthresh).

11. The device according to any one of the claims 1 to 10, **characterized in that** the control means (7) perform progressive closing of the first switch (6; 15; 19) adapted to the type of load detected when no fault has been detected.

12. The device according to any one of the claims 1 to 11, **characterized in that** the connecting means comprise a switch (8; 16; 17) connected, in series with the limiting impedance (R1) of high value, in parallel with the first switch (6; 15).

13. The device according to claim 12, **characterized in that** the switch (8) of the connecting means is an electronic switch, the limiting impedance (R1) being connected in parallel with a circuit formed by a protective resistor (R2) of low value connected in series with an additional switch (9) closed during the second test phase (II).

14. The device according to any one of the claims 5 to 11, **characterized in that** the electronic switch (15) constitutes the first switch.

15. The device according to any one of the claims 5 to 11, **characterized in that** the electronic switch (18) is connected, in series with a protective resistor (R2) of low value, in parallel with the first switch.

16. The device according to any one of the claims 5 to 11, **characterized in that** the first switch comprises the electronic switch (19) in series with an additional switch (20) open during the first test phase (I) and closed during the second test phase (II), the limiting impedance (R1) of high value being connected in parallel with the additional switch (20).

17. The device according to any one of the foregoing claims, **characterized in that** the number (n1) of half-waves used for identification of the load during the first test phase is about 4 or 5.

18. The device according to any one of the foregoing claims, **characterized in that** the number (n2) of current and voltage values measured for identification of the load during the first test phase is about 40.

**Patentansprüche**

1. Anordnung zur vorbeugenden Fehlererfassung in einer Last (5), die über, einen ersten Ausschalter (6 ; 15 ; 19) umfassende Schaltmittel an ein elektrisches Wechselstrom-Versorgungsnetz angeschlossen ist, wobei die Anordnung Steuermittel (7) zur Ansteuerung der Schaltmittel umfaßt, welche Steuermittel Lasttyperkennungmittel, Fehlererfassungsmittel mit Prüfmitteln zum vorübergehenden Anschluß der Last an Prüfversorgungsmittel sowie Meßmittel (10) zur Messung des Laststroms (Is) umfassen, **dadurch gekennzeichnet, daß**

- die Schaltmittel Verbindungsmittel (8; 16; 17; 19) umfassen, um die Last (5) über eine hochohmige Begrenzungsimpedanz (R1) mit dem Netz zu verbinden,
- die Steuerschaltung Wirkmittel zur Betätigung der Verbindungsmittel während einer ersten Prüfphase (I) umfassen,
- die Steuermittel Meßmittel zur Messung der Ausgangsspannung (Vs) der Anordnung umfassen,
- die Lasttyperkennungsmittel Meßmittel umfassen, um während einer begrenzten Anzahl (n1) von Halbwellen der Netzspannung (Vr) eine bestimmte Anzahl (n2) von Augenblickswerten des Stroms (Is) und der Spannung (Vs) in/an der Last zu messen, wobei die genannte bestimmte Anzahl (n2) der Werte im Zehnerbereich pro Halbwelle liegt,
- die Lasttyperkennungsmittel Mittel zur Bestimmung der Phasenverschiebung (Ø) zwischen Laststrom und Lastspannung und zur Berechnung der Lastimpedanz (Zc) mit Hilfe der gemessenen Augenblickswerte des Stroms und der Spannung sowie Mittel zum Vergleich der Phasenverschiebung und der Impedanz mit bestimmten, verschiedene Lasttypen abbildenden Werten umfassen.

2. Anordnung nach Anspruch 1, **dadurch gekennzeichnet, daß** die Begrenzungsimpedanz ein ohmscher Widerstand ist.

3. Anordnung nach einem der Ansprüche 1 und 2, **dadurch gekennzeichnet, daß** die Lasttyperkennungsmittel Mittel zur Bestimmung von die Last abbildenden, zusätzlichen elektrischen Parametern mit Hilfe der gemessenen Augenblickswerte der Spannung (Vs) und des Stroms (Is) sowie Mittel zum Vergleich der zusätzlichen Parameter mit bestimmten, verschiedene Lasttypen abbildenden Werten umfassen.

4. Anordnung nach Anspruch 3, **dadurch gekennzeichnet, daß** als zusätzliche Parameter wahlweise die Wirkleistung, die Blindleistung, die Mittelwerte von Strom und/oder Spannung, die Klirrfaktoren, die Schieflastfaktoren innerhalb einer Halbwelle, der Spannungsverlauf während der ersten Halbwellen, die Form der Spannungskurve oder die Anzahl der Strom- und/oder Spannungsnulldurchgänge verwendet werden.

5. Anordnung nach irgendeinem der Ansprüche 1 bis 4, **dadurch gekennzeichnet, daß** die Schaltmittel einen elektronischen Schalter (8 ; 15 ; 18 ; 19) umfassen, und die Steuermittel (7) während einer zweiten Prüfphase (II) das vorübergehende Schließen des elektronischen Schalters bewirken, derart daß während eines begrenzten Zeitabschnitts der Periode der Netzspannung (Vr) die Last (5) mit der Netzwechselspannung beaufschlagt wird, wobei der Augenblickswert der an die Last angelegten Spannung (Vs) während der zweiten Prüfphase unterhalb einer bestimmten Spitzenspannung (Vp) bleibt, die ihrerseits sehr viel kleiner ist als der Scheitelwert der Netzspannung.

6. Anordnung nach Anspruch 5, **dadurch gekennzeichnet, daß** bei Erkennung einer ohmschen Last die Lasttyperkennungsmittel Mittel zur Bestimmung der Lastimpedanz während der zweiten Prüfphase (II) sowie Mittel zur Feinerkennung der Art der ohmschen Last umfassen.

7. Anordnung nach einem der Ansprüche 5 und 6, **dadurch gekennzeichnet, daß** die Fehlererfassungsmittel Kurzschlußerfassungsmittel umfassen, die ihrerseits Mittel zum Vergleich des während der zweiten Prüfphase gemessenen Laststroms (Is) mit einem bestimmten Stromschwellwert (Isseuil) sowie Mittel zur Anzeige eines Kurzschlusses bei Überschreiten des genannten Stromschwellwerts durch den gemessenen Strom umfassen.

8. Anordnung nach einem der Ansprüche 5 bis 7, **dadurch gekennzeichnet, daß** die Fehlererfassungsmittel Differenzfehlerstrom-Erfassungsmittel umfassen, die ihrerseits Mittel (11) zur Messung des Differenzstroms (Id) während der zweiten Prüfphase, Mittel zum Vergleich des Differenzstroms mit einem bestimmten Differenzstromschwellwert (Idseuil) sowie Mittel zur Anzeige eines Differenzstromfehlers bei Überschreiten des genannten Differenzstromschwellwerts durch den gemessenen Differenzstrom umfassen

9. Anordnung nach irgendeinem der Ansprüche 1 bis 8, **dadurch gekennzeichnet, daß** die Fehlererfassungsmittel Überlasterfassungsmittel umfassen, die ihrerseits an den Lasttyp angepaßte Mittel zur Bestimmung einer geschätzten Nennleistung der Last (Pestimé), Mittel zum Vergleich der geschätzten Nennleistung mit einem bestimmten, die am Ausgang der Anordnung zur Verfügung stehende Leistung abbildenden Leistungsschwellwert (Pseuil) sowie Mittel zur Anzeige einer Überlast bei Überschreiten des Leistungsschwellwerts durch die geschätzte Nennleistung umfassen.

10. Anordnung nach irgendeinem der Ansprüche 1 bis 9, **dadurch gekennzeichnet, daß** sie Erfassungsmittel zum Präsensnachweis einer Last während der ersten Prüfphase umfaßt, welche Mittel ihrerseits Mittel zum Vergleich der Ausgangsspannung (Vseff) mit einem bestimmten Spannungsschwellwert (Vsseuil) umfassen, wobei die Steuermittel (7) die Lasttyperkennung und Fehlererfassung dann durchführen, wenn die Ausgangsspannung (Vseff) dem genannten Spannungsschwellwert (Vsseuil) entspricht oder ihn unterschreitet.

11. Anordnung nach irgendeinem der Ansprüche 1 bis 10, **dadurch gekennzeichnet, daß** die Steuermittel (7) ein allmähliches Schließen des ersten Schalters (6 ; 15 ; 19) in Abhängigkeit vom erfaßten Lasttyp bewirken, wenn zuvor kein Fehler erfaßt wurde.

12. Anordnung nach irgendeinem der Ansprüche 1 bis 11, **dadurch gekennzeichnet, daß** die Verbindungsmittel eine parallel zum ersten Schalter (6 ; 15) liegende Reihenschaltung aus einem Schalter (8 ; 16 ; 17) und der hochohmigen Begrenzungsimpedanz (R1) umfassen.

13. Anordnung nach Anspruch 12, **dadurch gekennzeichnet, daß** der Schalter (8) der Verbindungsmittel ein elektronischer Schalter ist und die Begrenzungsimpedanz (R1) parallel zu einer Reihenschaltung aus einem niederohmigen Schutzwiderstand (R2) und einem, während der zweiten Prüfphase (II) geschlossenen zusätzlichen Schalter (9) liegt.

14. Anordnung nach irgendeinem der Ansprüche 5 bis 11, **dadurch gekennzeichnet, daß** der elektronische Schalter (15) den ersten Schalter darstellt.

15. Anordnung nach irgendeinem der Ansprüche 5 bis 11, **dadurch gekennzeichnet, daß** der elektronische Schalter (18) mit einem niederohmigen Schutzwiderstand (R2) eine Reihenschaltung bildet, die parallel zum ersten Schalter liegt.

**16.** Anordnung nach irgendeinem der Ansprüche 5 bis 11, **dadurch gekennzeichnet, daß** der erste Schalter eine Reihenschaltung aus dem elektronischen Schalter (19) und einem zusätzlichen Schalter (20) umfaßt, welcher während der ersten Prüfphase (I) geöffnet und während der zweiten Prüfphase (II) geschlossen ist, wobei die hochohmige Begrenzungsimpedanz (R1) parallel zum zusätzlichen Schalter (20) geschaltet ist.

**17.** Anordnung nach irgendeinem der vorherigen Ansprüche, **dadurch gekennzeichnet, daß** die Anzahl (n1) der während der ersten Prüfphase zur Lasttyperkennung verwendeten Halbwellen etwa 4 oder 5 beträgt.

**18.** Anordnung nach irgendeinem der vorherigen Ansprüche, **dadurch gekennzeichnet, daß** die Anzahl (n2) der während der ersten Prüfphase zur Lasttyperkennung gemessenen Stromund Spannungswerte etwa 40 beträgt.

Fig. 1

Fig. 4

F1 — Initialisation

F2 — A2= 1  A1=A3= 0

F3 — Mesure Vs eff

F4 — Vs eff ≤ Vsseuil ?   Non

Oui

F5 — Identification de charge

F9 — A2= 1 avec déphasage  φ
A1= 0    A3= 1

F10 — Mesure Id, Is, Vs

F11 — Identification fine de certaines charges

F12 — Court-circuit ?   Oui

Non

F13 — Signalisation défaut

F14 — Défaut différentiel ?   Oui

Non

F15 — Surcharge ?   Oui

Non

F16 — Démarrage progressif

F17 — Fonctionnement permanent

**Fig. 2**

Fig. 3

Figure 5

Figure 6

Figure 7

Figure 8

Figure 9

Figure 10

Figure 11

Figure 12

Fig. 13

Fig. 14

Fig. 15a

Fig. 15b

Fig. 16a

Fig. 16b

Fig. 17

Fig. 18

**Fig. 19**

F24

F25

Surcharge ?

Calcul
Pestimée

Pestimée > Pseuil ?

Oui → vers F13

Non

Fig. 20

Fig. 21

Fig. 22

Fig. 23